# EUROPEAN PATENT SPECIFICATION

(11) **EP 2 792 624 B1**
(45) Date of publication and mention of the grant of the patent: **08.06.2016**
(21) Application number: 14165246.1
(22) Date of filing: 17.04.2014
(51) Int. Cl.: B65G 47/14

(54) **Objects singularizing machine**
Maschine zum Vereinzeln von Objekte
Machine pour la singularisation d'objets

(30) Priority: 18.04.2013 IT MI20130638
(43) Date of publication of application: 22.10.2014
(73) Proprietor: BONINO S.p.A. con unico azionista, 15121 Alessandria (IT)
(72) Inventor: Bonino, Alessandro, I-15121 ALESSANDRIA (IT); Gasparini, Enrico, I-15121 ALESSANDRIA (IT)
(74) Representative: Leihkauf, Steffen Falk

(56) References cited:
- EP-A1- 1 921 028
- WO-A1-90/03551
- GB-A- 843 864
- US-A- 2 829 769
- US-A- 3 168 186
- US-A- 4 699 261
- US-A- 4 709 798
- US-A1- 2008 000 816

## Description

The present invention generally relates to systems to arrange in sequence a plurality of objects, particularly objects having the same shape, with a relative positioning or a predetermined distance between the objects and, optionally, with a predetermined orientation thereof, to the purpose of a controlled supply of such objects to successive handling steps. Particularly, the invention relates to a machine for singularizing and/or orienting objects.

The singularizing or orienting machines are usually employed in packaging (for example, packaging lines of an assembling kit comprising a plurality of dowels, screws, nuts, washers, etc.), manufacturing, processing, assembling lines, or the like, of industrial or consumer products in order to allow supplying components, pieces, products (referred to herein below as "objects") with an order and/or orientation suitable for a successive treatment or processing step.

In order to meet the needs of an automatized industrial handling operation, the systems for singularizing and/or orienting objects have first to ensure a high arranging and/or orienting speed of the objects in the desired order. Furthermore, the start-or re-start time of the object singularization and/or orientation process after a machine downtime step or the time of stop in the flow of objects exiting the machine have not to be unduly long. In the scope of the present description, by the term "singularization" is meant the arrangement of a sequence of objects with a predetermined order and relative distance between the single objects.

Objects singularizing and/or orienting machines are known, which comprise a rest surface movable along a selection path and adapted to receive the objects, a feeder to convey the objects on the rest surface in an initial point of the selection path, and handling means arranged along the selection path between the initial point and an outlet point, such handling means being configured to eject objects from the rest surface or to move objects on the rest surface, so as to obtain, at the outlet point of the selection path, a sequence of objects having a desired positioning, i.e., an order and/or orientation suitable to the subsequent treatment steps. The objects singularizing and/or orienting machine may further comprise a conveyor, drawing the objects from the rest surface at the outlet point of the selection path.

In the so-called "rotating" singularizing and/or orienting machines, the selection path is circular or in the shape of an arc of a circle, and the rest surface may be substantially continuous, or it may form discrete orientation seats to receive the objects with a provisional, for example, substantially random, positioning and order. As a handling means, the use is known of a blower, directing a compressed air jet against the objects received on the rest surface so as to eject or stir and re-arrange the initially malpositioned objects.

With reference to the supply of the objects on the rest surface, one can distinguish between rotating machines with a single rotating disc or a double rotating disc.

In the single rotating disc machines, the rest surface is formed in a support ring extending along an outer circumference of (and integral with) a small rotating plate. A stationary side wall, circumferentially extending substantially along the entire selection path, defines the selection path on a radially outer side thereof and, together with the small rotating plate, a collection space to receive the loose objects to be singularized and/or oriented. The small rotating plate is inclined (but it may also be flat) and rotatable by a motor in order to supply the objects from the collection space on the rest surface and to move the rest surface along the selection path.

In the double rotating disc machines, the rest surface is formed in a support ring (formed by a rotating housing or outer rotating disc) extending along an outer circumference of an inner small rotating plate. A stationary side wall, circumferentially extending substantially along the entire selection path, defines the selection path on a radially outer side thereof. The support ring (or the housing or outer rotating disc) forms a radially inner surface, which defines, together with the inner small rotating plate, a collection space to receive the loose objects to be singularized and/or oriented. The small rotating plate is inclined and rotatable by a first motor to supply the objects from the collection space on the rest surface of the support ring and the support ring (or the rotating housing or outer rotating disc) is rotatable by a second motor to move the rest surface along the selection path.

The systems of singularization and/or orientation of objects of the prior art carry out, along the selection path, an operation or a series of predetermined, invariable handling operations during the entire operation time of the machine. Such operations, for example, by a compressed air blow, are performed both in the presence and in the absence of an object on the rest surface, and generally on any object, independently from the position and orientation thereof. This makes the singularization and orientation operations not very targeted and slow. Furthermore, since the handling operations have to be suitable to all the possible situations of initial positioning, they are complex, requiring long selection paths, and usually eject an excessive amount of objects from the selection path. As a result, the number of pieces conveyed to the outlet point per time unit is undesirably low. Furthermore, the compressed air manipulators have considerable inner inertias, which further slow the handling steps and hinder the implementation of timed air blow pulses.

A further drawback of the known objects singularizing and/or orienting systems is the long re-start times of the machine after a machine downtime step due to an interruption in the flow of objects exiting the machine, for example, due to a situation of intervention in the manufacturing line downstream of the singularization or orientation station.

A further drawback of the prior art is the insufficient versatility of the selection path to react, for example, to a change in the format of the object to be singularized or to be oriented. EP1921028A1 describes a rotating object feeding device according to the preamble of claim 1 that can be considered a closest state of the art for the present invention.

Therefore, the object of the present invention is to provide a device and a method for singularizing and/or orienting objects, having such characteristics as to obviate at least some of the drawbacks mentioned with reference to the prior art.

This and other objects are achieved by a device for singularizing and/or orienting objects according to claim 1, and by a method for singularizing and/or orienting objects according to claim 13.

The dependent claims relate to advantageous embodiments.

According to an aspect of the invention, the device for singularizing and/or orienting objects comprises:
- a rest surface movable along a selection path and adapted to receive the objects,
- a feeder to convey the objects onto the rest surface in an initial point of the selection path,
- handling means associated to the selection path, said handling means being configured to eject objects from the rest surface or to displace objects on the rest surface in a handling length between the initial point and an outlet point of the selection path, so as to obtain, at the outlet point of the selection path, a sequence of objects having a desired positioning,
- at least one position detector, associated to the selection path and configured to detect position and/or shape characteristics of said objects in a detection length of the selection path upstream of the handling length and to generate corresponding position signals,
- an electronic control unit in signal connection with the position detector and with the handling means and configured to actuate the handling means selectively as a function of the position signals (i.e., of the position characteristics detected).

By virtue of the detection of the position and/or shape characteristics of the objects and the selective handling thereof as a function of the real position thereof, it is possible to eject only the indispensable number of objects, thus increasing the machine yield and speed. Furthermore, by virtue of the targeted and selective handling, it is possible to shorten the handling path and to reduce the dimensions of the machine, or to increase the singularization and/or orientation yield, while keeping the machine dimension constant.

In accordance with a further aspect of the invention, the control unit is configured to process the position signals so as to count the objects transported along the detection length and to actuate the handling means as a function of the count of objects.

This allows grouping the singularized and/or oriented objects into groups with a predetermined number of individual objects and, downstream, handling (for example, transporting, separating, packaging, combining) whole groups of such objects.

According to the invention, the handling means comprises electromagnetic pushers.

Such electromechanical manipulators can be actuated electrically and controllable by the control unit with inertias of almost zero, such as to be able to reach a frequency of up to 100 movements per second, for example 100 mechanical ejection or displacement strokes per second. This allows, on one hand, increasing the handling speed of the objects along the selection path and, on the other hand, acting in a targeted manner on the single object.

In accordance with a still further aspect of the invention, the device may comprise a plurality of deviation members or only one deviation member, for example, a deviation palette, associated to the selection path and displaceable from a rest position to a deviation position with respect to the rest surface, wherein the deviation member guides all the objects remained on the rest surface away from the rest surface and into the feeder, so as to zero the flow of objects at the outlet point, while the rest surface remains moving.

This allows zeroing the machine downtimes and the machine re-start times in the case that it is necessary to stop the flow of exiting objects. Such characteristic and step of method may be implemented also in the absence of the position detection of the objects and in the absence of electromechanical handling means.

In accordance with a further aspect of the invention, the position of the side wall is adjustable with respect to the position of the rest surface. With particular reference to rotating singularizing and/or orienting machines, the position of the side wall is adjustable both in height and in the radial direction.

This allows a quick and versatile adaptation of the shape of the selection path to a possible change in the format of the objects to be singularized or to be oriented.

In accordance with a further aspect of the invention, the device may comprise a shaving member associated to the selection path and positioned or displaceable in a shaving position at a preset vertical distance from the rest surface, so as to guide and push objects remained stacked above other objects rested on the rest surface away from the objects below.

In this manner, stackings of objects are eliminated, particularly before they enter the detection length. This considerably facilitates the position detection and the count of the single objects, for example, by proximity sensors, optical sensors, or inductive sensors, as well as a more targeted and quicker handling of the single object, without having to act on stacks of objects.

In order to better understand the invention and appreciate the advantages thereof, some embodiments thereof will be described herein below by way of non-limiting example, with reference to the appended figures, in which:
Fig. 1 is a top view of a device for singularizing and/or orienting objects according to an embodiment of the invention;
Fig. 2 is a vertical sectional view of the device in Fig. 1;
Figs. 3 and 4 are perspective views of the device in Fig. 1;
Figs. 5, 6, 7 are detailed views of the device, showing a shaving member, a first detection length of a selection path, a first position detector assembly, a first handling length of the selection path, a first manipulator and a position adjusting system of a side wall of the device;
Figs. 8,9 are detailed views of the device, showing a deviation member upstream of an outlet point of the selection path, as well as a part of the position adjusting system of the side wall;
Fig. 10 is a detailed view of the device, showing a second detection length of the selection path or a discharge path, as well as a second detector assembly associated to the second detection length.

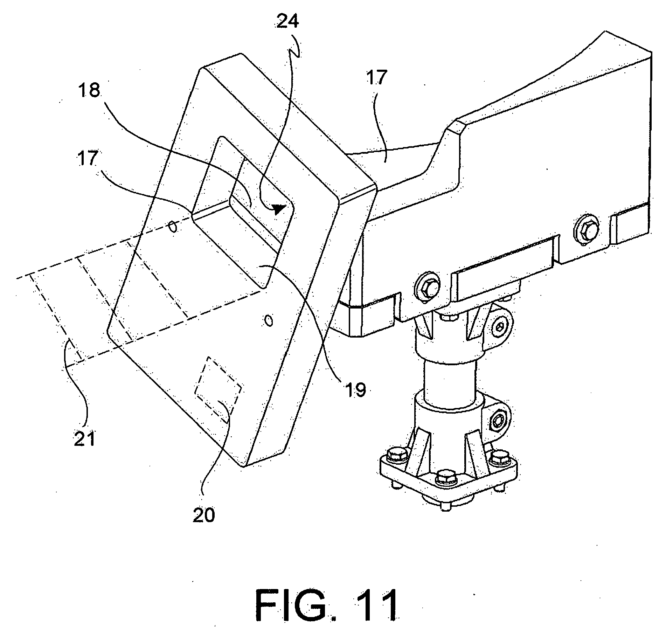

Fig. 11 is a further detailed view of the second detection length of the selection path or a discharge path, as well as of the second detector assembly associated to the second detection length.

With reference to the Figures, a device 1 for singularizing and/or orienting objects 5 comprises a support structure 2,
a rest surface 3 movable along a selection path 4 and adapted to receive the objects 5,
a feeder 6 to convey the objects 5 on the rest surface 3 in an initial point 7 of the selection path 4,
first handling means 8 associated to the selection path 4 and configured to eject objects from the rest surface 3 or to displace objects on the rest surface 3 in a first handling length 9 between the initial point 7 and an outlet point 10 of the selection path 4, so as to obtain, at the outlet point 10 of the selection path 4, a sequence of objects having a desired positioning,
a first position detector 11 associated to the selection path 4 and configured to detect position characteristics of the objects 5 in a first detection length 12 of the selection path 4 upstream of the first handling length 9, and to generate corresponding position signals,
an electronic control unit 13 in signal connection with the first position detector 11 and with the first handling means 8 and configured to actuate the first handling means 8 selectively as a function of the position characteristics detected.

By virtue of the detection of the position and/or shape characteristics of the objects 5 and the selective handling thereof as a function of the real position thereof, it is possible to eject only the indispensable number of objects, thus increasing the device yield and speed. Furthermore, by virtue of the targeted and selective handling, it is possible to shorten the selection path 4 and to reduce the dimensions of the device, or to increase the singularization and/or orientation yield, while keeping the overall dimensions constant.

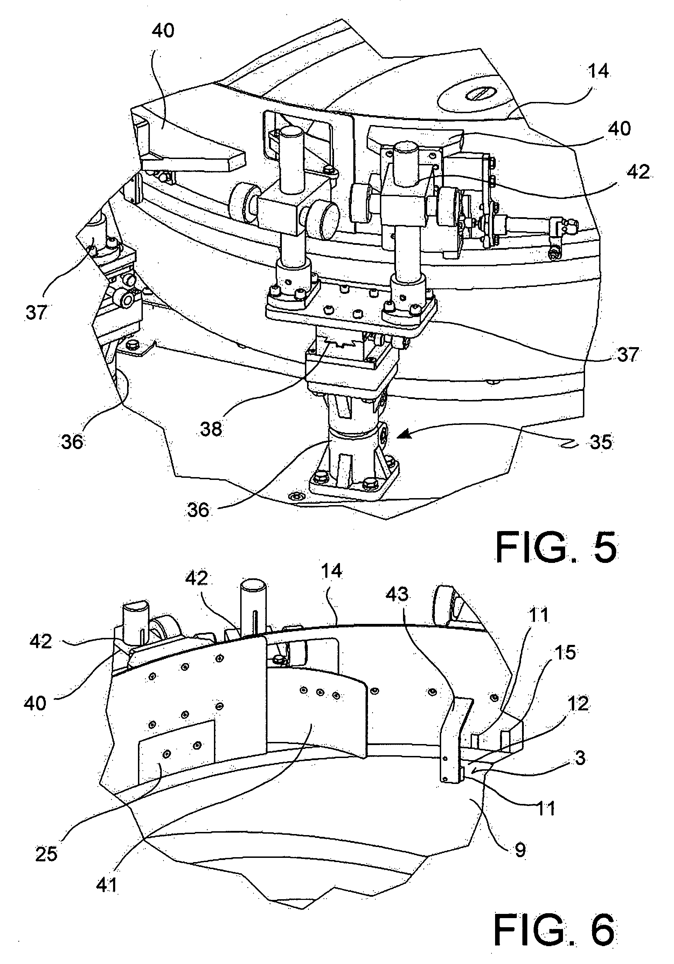

In accordance with embodiments, the first position detector 11 may comprise a magnetic, inductive, or optical proximity sensor, a video camera or a photocell sensor, or a video camera with a light source and a photo-sensitive receiver adapted to detect and distinguish light and shadow zones projected thereupon or, alternatively, an ultrasound detector. Advantageously, the first detector 11 or the individual components thereof (for example, the light source and the photo-sensitive member or the video camera, an inductive winding, or a transmitter and a corresponding ultrasound receiver) are mounted on two opposite sides of the selection path, for example, at a side wall 14 and/or at a support arm 43 projecting from the side wall 14 astride of the selection path 4 (Fig. 6).

With reference to an orientation function of the objects 5, the control unit may be configured to recognize, based on the position signals received by the first position detector 11, predetermined orientation situations of the objects and to control the first handling means 8 as a function of the orientation situations identified and a corresponding handling (displacement, rotation, ejection) recipe provided for in a handling program loaded in a memory of the control unit 13.

With reference to a singularization function of the objects 5, the control unit may be configured to recognize, based on the position signals received by the first position detector 11, predetermined situations of relative position between a plurality of such objects 5 (for example, partial overlapping, contact, distance lesser than a predetermined minimum distance) and/or of shape (e.g., length), and to control the first handling means 8 as a function of the identified situations of relative position and/or shape and a corresponding handling (e.g., displacement, ejection) recipe provided for in the handling program loaded in the memory of the control unit 13. Such handling program can be advantageously modified by the user or provider of the device to adapt the device 8 to objects and to different singularization and/or orientation operations. In an embodiment, the first detector 11, for example, a photo-cell, provides the control unit 13 with a signal corresponding to the presence of an object in its detection field, and the control unit 13 processes the object presence signal, for example, taking into account the object residence time in the detection field and the handling speed of the rest surface 3, to carry out a comparison between a real value (based on the detection) representative of a linear dimension of the object or of a group of objects detected by the first detector 11 and one or more predetermined reference values representing limits of a nominal or desired range of such linear dimension. In the case that the real value is external to the nominal range, the control unit 13 actuates the handling means 8 for the ejection or the displacement of one or more of the objects the position of which has been detected as not compliant with the reference values. Alternatively, or in addition, the first position detector 11 and the control unit 13 can be configured to perform the detection and the processing of real values representative of a magnitude, for example, an area, shape, projection, two-dimensional or three-dimensional volume of the object or a group of objects detected by the first detector 11 and the comparison with one or more predetermined reference values representing limits of a nominal or desired range of such two-dimensional or three-dimensional magnitude. Furthermore, in an embodiment, the first position detector 11 may be adjustable to adjust the position and/or orientation of the detection field thereof, for example, for a detection in the radial direction (with respect to the rotational axis of the rest surface 3) or in the vertical or oblique direction or in the radial and vertical direction.

In accordance with an embodiment, the first handling means 8 may comprise one or more electromechanical manipulators, for example, electromagnetic pushers controlled by the control unit 13.

Such electromechanical manipulators can be actuated electrically and controllable by the control unit with inertias of almost zero, such as to be able to reach a frequency up to 100 movements per second, for example, 100 mechanical ejection or displacement strokes per second. This allows on one hand increasing the handling speed of the objects along the selection path and, on the other hand, acting in a targeted manner on the single object.

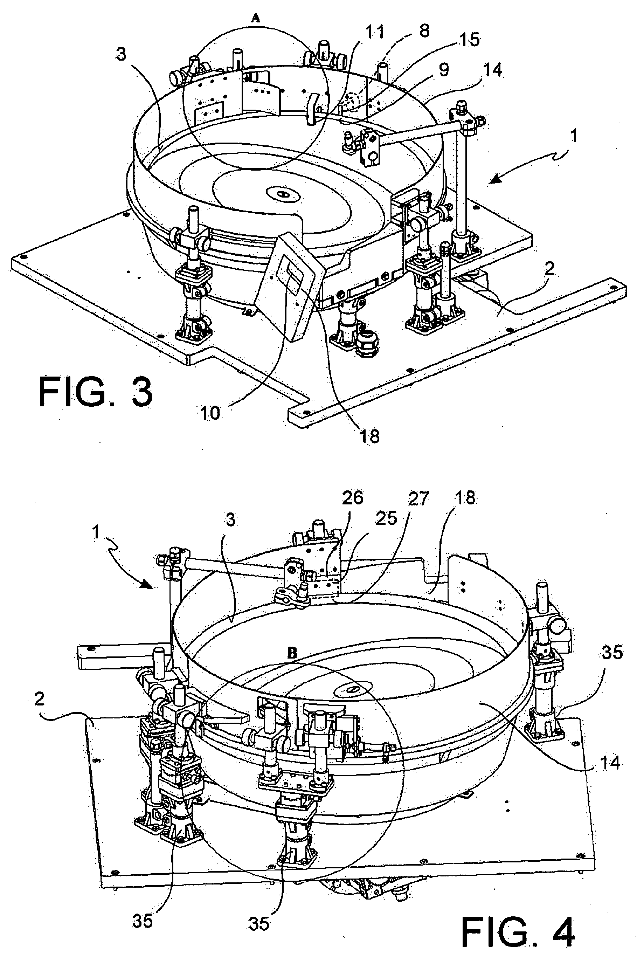

In accordance with an embodiment, the electromagnetic pusher may be actuated, for example, by means of a "voice coil" motor, and arranged laterally outside of the selection path 4, for example, behind the above-mentioned side wall 14. A small piston 15 or, more generally, a contact portion ("end effector") of the electromechanical manipulator may have a stroke of, for example,6 mm ... 10 mm, and may act on the objects 5 through a through opening 16 in the side wall 14 (Figs. 3, 5, 6) to displace or eject them from the rest surface 3.

Preferably and as illustrated in the figures, the small piston 15 or the contact portion of the manipulator are in the shape of a plate or blade that is thin in the direction of the selection path 4 and extending upwardly (preferably vertically oriented) in order to be able to act in a precise and selective manner, yet covering the entire height where the objects to be ejected or displaced may be present. The contact portion 15 may be arranged at a distance of about 7 cm ... 10 cm ... 13 cm from the first position detector 11 (measured along and in the direction of the selection path 4). The contact portion 15 may have the shape of a thin plate, sheet, or blade (substantially vertical and with a substantially vertical front surface) oriented in a plane radial to the rotational axis of the rest surface 3. The front surface and/or a cross-section of the contact portion 15 may be substantially rectangular (except for possible openings obtained in the plate, sheet, or blade) with a thickness of less than 5mm, preferably less than 3mm. The height of the front surface of the contact portion 15 is adapted to the shape and dimension of the objects to displace and/or to be ejected, preferably the height of the contact portion 15 is larger than a minimum height of the object, still more preferably, the height of the contact portion 15 is larger than 2 folds (e.g., 2.5 folds) the minimum height of the object to be ejected. The contact portion 15 is displaceable in the direction preferably radial with respect to the rotational axis of the rest surface 3 to eject objects from the rest surface 3 or to displace objects on the rest surface 3. During the movement thereof, the contact portion 15 is preferably at a vertical distance lesser than 2mm, preferably less than 1mm, from the rest surface 3, and, in an embodiment, the contact portion 15 could even brush against the rest surface 3.

An operation mode of the device 1 and a particular step of the method is to selectively eject overlapping objects to singularize them in order to obtain a row of objects mutually definitely spaced apart and distinguishable in the direction of the selection path 4. By virtue of the optical position detection in combination with the electromechanical ejection as a function of the detected positions, the delays and inertias of the pneumatic systems of the prior art are eliminated, and the consumption of expensive compressed air is obviated.

In an embodiment, both the first position detector 12 and the first handling means 8 are secured to the side wall 14 extending along the selection path 4.

In accordance with a further embodiment, the control unit 13 may be configured to process the position signals received by the first position detector 11 or by a further detector so as to count the objects 5 transported along the first detection length 12 or along a further detection length or to count and to actuate the handling means as a function of the count of the objects 5.

This allows grouping the singularized and/or oriented objects 5 in groups with a predetermined number of single objects, and, downstream, handling (for example, transporting, separating, packaging, combining) whole groups of such objects.

Such function may be implemented, for example, in preparing a packaging of a fixed number of candies or screws, in a bag, respectively, or in the case that it is desired to group in a package a preset number of candies of the type A (singularized and counted by a first device 1), a preset number of candies of the type B (singularized and counted by a secondo device 1), and so on.

In these cases, the counting functions of the objects, of grouping and separation of the groups of objects 5 so formed may be carried out along the selection path 4 or, alternatively, along a discharge path 17 downstream of the outlet point 10 of the selection path.

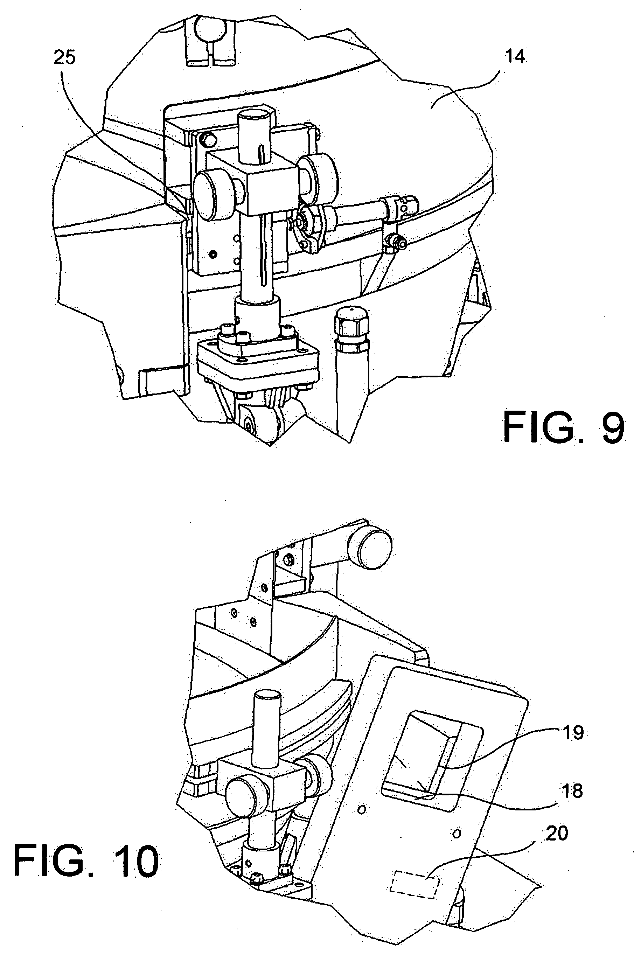

To this aim, a second counting detector 19 may be provided for, which is associated to the selection path 4 or the discharge path 17, and configured to count the objects 5 (by now singularized and arranged in a row and mutually spaced apart) and to detect at least one position characteristic thereof in a second detection length 18 of the selection 4 or discharge 17 path and to generate corresponding count and position signals. The electronic control unit 13 or a dedicated count control unit 20 in signal connection with the second counting detector 19 and with grouping means 21 and configured to actuate the grouping means 21 as a function of the count and position signals and a grouping recipe of a grouping program loaded in a memory of the control unit (Fig. 10).

In accordance with embodiments, the second detector 11 of count 19 may comprise a magnetic, inductive, or optical proximity sensor, a video camera, or a photocell sensor, or a video camera with a light source and a photo-sensitive receiver adapted to detect and distinguish light and shadow zones projected thereupon or, alternatively, an ultrasound detector. Advantageously, the second detector 19 or the individual components thereof (for example, the light source and the photo-sensitive member or the video camera, an inductive winding, or a transmitter and a corresponding ultrasound receiver) are mounted on two opposite sides of the selection 4 or discharge 17 path (or to multiple emitting-receiving units mutually turned by 90 degree to capture optical or ultrasound images in two perpendicular directions, e.g., the vertical and horizontal direction), for example within an open through channel or tubular through tunnel 24 protecting against the external light pollution.

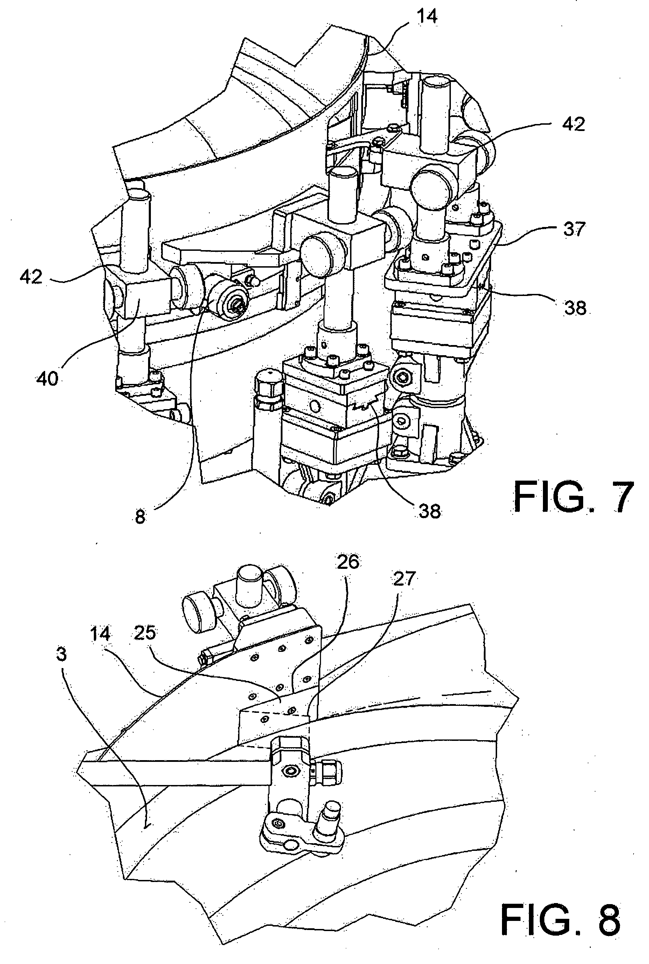

In accordance with an embodiment (Figs. 4, 8), the device 1 may comprise one or more deviation members 25, for example, a deviation palette, associated to the selection path 4 and displaceable from a rest position 26 (not interfering with the selection path 4) to a deviation position 27 interfering with the selection path 4 so as to guide all the objects 5 remained on the rest surface 3 away from the rest surface 3 and into the feeder 6, so as to zero the flow of objects at the outlet point 10, while the rest surface 3 remains moving.
Preferably, the deviation member 25 is positioned immediately upstream of the outlet point 10 and it may be actuated electrically (by an electromagnetic motor or actuator) or pneumatically. The deviation member and an actuation unit thereof are preferably supported by the side wall 14 or, together with it, by the support structure. 2. The deviation member 25 may be adjustable in height and in the horizontal direction transversal to the direction of the selection path 4, by an adjusting guide system that can be actuated manually or by an electric actuation controlled by the control unit 13.

The deviation member 25 allows the ejection and recirculation in the feeder 6 of all the objects 5 coming at the outlet point 10, thus obviating the need to stop the entire device 1 when the flow of outgoing objects has to be stopped. This zeroes the downtimes and the machine re-start times.

In order to be able to actuate the main deviation member 25 when the handling path 6 is empty (thus obviating the risk that the movement of the main deviation member 25 changes the position of objects remained in the working path), it is advantageous to arrange an auxiliary deviation member 25 upstream of the deviation member 25, preferably upstream of the shaving member 1 or the first handling length 9 and to actuate the auxiliary deviation member 25 to free the whole handling path between the two auxiliary and main deviation members 25 before the main deviation member 25 is retracted to the rest position 26.

The supplying of the objects 2 in the handling path 6 occurs in a known manner, and the invention contemplates both the rotating system with a single rotating disc, and the double rotating disc system described above.

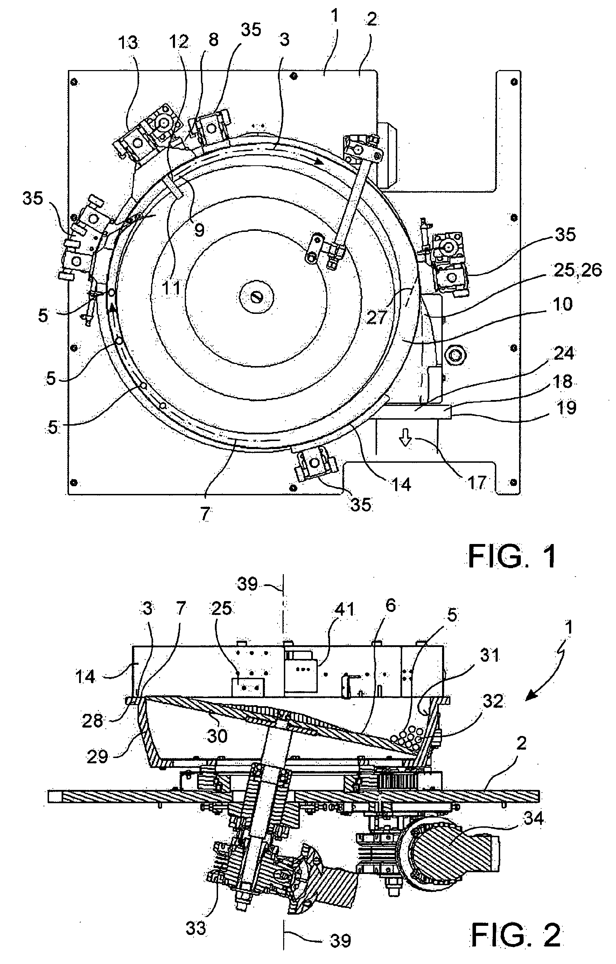

In the embodiment shown in Fig. 2 (double rotating disc system), the rest surface 3 is formed in a support ring 28 of an outer rotating housing 29, which support ring extends along an outer circumference of an inner small rotating plate 30. The side wall 14 is stationary and circumferentially extending along substantially the entire selection path 4, and it defines the selection path 4 on a radially outer side thereof. The support ring 28 of the outer rotating housing 29 forms a radially inner surface 31 that defines, together with the inner small rotating plate 30, a collection space 32 to receive the loose objects to be singularized and/or oriented.
The small rotating plate 30 is inclined and rotatable by a first motor 33 to supply the objects from the collection space 32 on the rest surface 3 of the support ring 28, and the outer rotating housing 29 is rotatable by a second motor 34 to move the rest surface 3 along the selection path 4.

In accordance with a further embodiment, the position of the side wall 14 is adjustable with respect to the position of the rest surface 3, preferably both in height and in the lateral or radial direction with respect to the rotational axis of the rest surface 3.

This allows a quick and versatile adaptation of the shape of the selection path 4 to a possible change in the format of the objects 5 to be singularized or to be oriented.

In an embodiment, the outer wall 14 comprises a plurality of preferably three wall segments independently connected to the support structure 2 by guide columns 35 (Figs. 5, 7), having a base 36 connected to the support structure 2, an intermediate portion 37 connected to the base 36 by a horizontal guide 38, preferably radial to the rotational axis 39 of the rest surface 3, allowing a position adjustment of the intermediate portion 37 with respect to the base 36 in such horizontal direction, and a connecting portion 40 secured to the side wall 14 and connected to the intermediate portion 37 by a vertical guide 42 allowing a height adjustment of the connecting portion 40 with respect to the intermediate portion 37.

The adjustment of the adjustment columns 35 is actuatable manually or by an electric actuation controlled by the control unit 13.

In the proximity of the initial point 7 and of the outlet point of the selection path 4, the side wall 14 is supported in a manner adjustable in height, but stationary in the radial direction, so as to arrange a definite and invariable interfacing area with other treatment stations.

In the transition zones between two segments of the side wall 14, the ends of the two segments are overlapping, to ensure the continuity of the same wall and to allow an expansion or a radial shrinking thereof.

According to a further embodiment (Figs. 3, 6), the device 1 may comprise a shaving member 41, for example, a palette, associated to the selection path 4 and positioned or displaceable in a shaving position above the rest surface 3 and at a preset vertical distance (adjustable height) therefrom, so as to guide and to push objects remained stacked above other objects rested on the rest surface 3 away from the objects below. Advantageously, the shaving member 41 is arranged immediately upstream of the first detection length 12.

The shaving member 43 may be supported by one of the guide columns 35 and adjustable in height independently from the side wall 14, but adjustable in the horizontal direction transversal to the direction of the selection path 4 together with the side wall.

The adjustment in height of the shaving member 41 is actuatable manually, or by an electric actuation controlled by the control unit 13.

By virtue of the shaving member 41, stackings of objects are eliminated, particularly before they enter the detection length. This considerably facilitates the position detection and the count of the single objects, as well as a more targeted and quicker handling of the single object, without having to act on stacks of objects.

Each of the characteristics of the device 1 and of the corresponding steps of the method for singularizing and/or orientating objects at least partially achieve the objects of the invention, and they can be implemented and carried out independently one from the other. The combinations thereof, described and illustrated in the drawings, achieve further synergic effects with reference to the singularization and/or orientation speed.

The invention is advantageously implementable in several machines for processing industrial objects, such as, for example, moulded plastic pieces, metal objects, plant origin products or foods, as well as for assembling kits containing counted objects.

## Claims

1. A device (1) for singularizing and/or orienting objects (5), comprising:
- a support structure (2),
- a rest surface (3) connected to the support structure (1) and movable along a selection path (4) and adapted to receive the objects (5) starting from an initial point (7) of the selection path (4),
- first handling means (8) associated to the selection path (4) and configured to eject objects from the rest surface (3) or to displace objects on the rest surface (3) in a first handling length (9) between the initial point (7) and an outlet point (10) of the selection path (4), so as to obtain, at the outlet point (10) of the selection path (4), a sequence of said objects (5) having a desired positioning,
- a first position detector (11) associated to the selection path (4) and configured to detect position and/or shape characteristics of the objects (5) in a first detection length (12) of the selection path (4) upstream of the first handling length (9), and to generate corresponding position signals,
- an electronic control unit (13) in signal connection with the first position detector (11) and with the first handling means (8), and configured to actuate the first handling means (8) selectively as a function of the position and/or shape characteristics,
**characterised in that** the first handling means (8) comprise at least one electromagnetic pusher with a contact portion (15) adapted to act on the objects (5) rested on the rest surface (3),
wherein said contact portion has the shape a plate or blade that is thin in the direction the selection path (4) and extending upwardly.

2. The device (1) according to claim 1, wherein the first position detector (11) comprises a sensor selected from the group consisting of:
- a magnetic sensor,
- an inductive sensor,
- an optical sensor,
- a video camera,
- a light source and a photo-sensitive receiver, adapted to detect and distinguish light and shadow zones projected thereupon,
- a ultrasound detector.

3. The device (1) according to any of the preceding claims, wherein said contact portion (15) is oriented vertically in a plane radial to a rotational axis the rest surface (3).

4. The device (1) according to any preceding claim, wherein the electromagnetic pusher is separated from the selection path (4) by a side wall (14) extending laterally along at least a part of the selection path (4), and said contact portion (15) is adapted to act on the objects (5) rested on the rest surface (3) through a through opening (16) in the side wall (14).

5. The device (1) according to claim 4, wherein the first position detector (12) and the first handling means (8) are secured to the side wall (14).

6. The device (1) according to any of the preceding claims, wherein the control unit (13) is configured to process the position and/or shape signals received by the first position detector (11) so as to count the objects (5) transported along the first detection length (12) and to actuate the handling means as a function of the count of the objects (5).

7. The device (1) according to any of the preceding claims, comprising:
- a second counting detector (19) associated to the selection path (4) or to a discharge path (17) downstream of the outlet point (10) and configured to count the objects (5) and to detect at least one position and/or shape characteristic thereof in a second detection length (18) of the selection (4) or discharge (17) path and to generate corresponding count and position signals.

8. The device (1) according to any of the preceding claims, comprising at least one deviation member (25) associated to the selection path (4) upstream of the outlet point (10) and displaceable from a rest position (26) not interfering with the selection path (4) to a deviation position (27) interfering with the selection path (4) so as to guide all the objects (5) remained on the rest surface (3) away from the rest surface (3).

9. The device (1) according to any of the preceding claims, wherein the selection path is at least partially circular, and a side wall (14) is circumferentially extending along said selection path (4), defining it on a radially outer side thereof, wherein the position of the side wall (14) is adjustable with respect to the position of the rest surface (3) both in height and in the radial direction with respect to a rotational axis of the rest surface (3).

10. The device (1) according to claim 9, wherein the outer wall (14) comprises a plurality of wall segments, the ends of which are slidably overlapping in the transition zones between two confining segments to ensure the continuity of the side wall (14) and to allow an expansion or a radial shrinking thereof,
said wall segments being connected independently to the support structure (2) by guide columns (35) having:
- a base (36) connected to the support structure (2),
- an intermediate portion (37) connected to the base (36) by a horizontal guide (38) allowing a position adjustment of the intermediate portion (37) with respect to the base (36) in the horizontal direction,
- a connecting portion (40) secured to the side wall (14) and connected to the intermediate portion (37) by a vertical guide (42) allowing a height adjustment of the connecting portion (40) with respect to the intermediate portion (37).

11. The device (1) according to any of the preceding claims, comprising a shaving member (41) associated to the selection path (4) upstream of the first detection length (12) and positioned or displaceable in a shaving position above the rest surface (3) and at an adjustable height from said rest surface (3), so as to wipe out objects (5) remained stacked above other objects (5) rested on the rest surface (3).

12. The device (1) according to any the preceding claims, in which the contact portion (15) is displaceable in a radial direction with respect to the rotational axis the rest surface (3) to eject objects from the rest surface (3) or to displace objects on the rest surface (3), and the contact portion (15) moves at a vertical distance less than 2mm from the rest surface (3).

13. A method for singularizing and/or orienting objects (5), comprising the steps of:
- moving a rest surface (3) along a selection path (4);
- defining the objects (5) in a continuous manner and with a random position on the rest surface (3) in an initial point (7) of the selection path (4),
- ejecting objects from the rest surface (3) or displacing objects on the rest surface (3) in a handling length (9) between the initial point (7) and an outlet point (10) of the selection path (4), so as to obtain, at the outlet point (10) of the selection path (4), a sequence of said objects (5) having a desired positioning, **characterized by** the steps of:
- using an optical sensor to detect position characteristics of the objects (5) in a first detection length (12) of the selection path (4) upstream of the first handling length (9), and to generate corresponding position signals,
- performing the step ejecting objects from the rest surface (3) or displacing objects on the rest surface (3) in said handling length (9) by means of an electromagnetic pusher actuated by an electronic control unit according to the position signals generated by the optical sensor, wherein said electromagnetic pusher has a contact portion (15) adapted to act on the objects (5) rested on the rest surface (3),
wherein said contact portion has the shape a plate or blade that is thin in the direction the selection path (4) and extending upwardly.

14. The method according to claim 13, comprising the steps of:
- using an optical sensor to detect a position characteristic of said objects and to generate corresponding position and count signals,
- counting the objects by processing the position and count signals by an electronic control unit;
- dividing said counted objects into discrete groups by an electromechanical separating device and actuating said electromechanical separating device as a function of the position and count signals.

## Patentansprüche

1. Vorrichtung (1) zum Vereinzeln und/oder Orientieren von Objekten (5), umfassend:
- eine Halterungsstruktur (2),
- eine Lagerungsfläche (3) verbunden mit der Halterungsstruktur (1) und beweglich entlang eines Auswahlpfades (4) und ausgelegt zum Empfangen der Objekte (5) beginnend an einem Initialpunkt (7) des Auswahlpfades (4),
- erste Handhabungsmittel (8) assoziiert mit dem Auswahlpfad (4) und konfiguriert zum Ausgeben von Objekten von der Lagerungsfläche (3) oder zum Verlagern von Objekten auf der Lagerungsfläche (3) entlang einer ersten Handhabungslänge (9) zwischen dem Initialpunkt (7) und einem Ausgabepunkt (10) des Auswahlpfades (4), um an dem Ausgabepunkt (10) des Auswahlpfades (4) eine Folge der Objekte (5) zu erhalten aufweisend eine gewünschte Positionierung,
- einen ersten Positionsdetektor (11) assoziiert mit dem Auswahlpfad (4) und konfiguriert zum Erfassen von Positions- und/oder Formeigenschaften der Objekte (5) entlang einer ersten Erfassungslänge (12) des Auswahlpfades (4) stromaufwärts von der ersten Handhabungslänge (9), und um entsprechende Positionssignale zu erzeugen,
- eine elektronische Regel-/Steuereinheit (13) in Signalverbindung mit dem ersten Positionsdetektor (11) und mit den ersten Handhabungsmitteln (8) und ausgelegt zum selektiven Betätigen der ersten Handhabungsmittel (8) als eine Funktion der Positions- und/oder Formeigenschaften,
**dadurch gekennzeichnet, dass** die ersten Handhabungsmittel (8) mindestens einen elektromagnetischen Schieber mit einem Kontaktbereich (15) umfassen ausgelegt zum Wirken auf die Objekte (5), die auf der Lagerungsfläche (3) gelagert sind,
wobei der Kontaktbereich die Form einer Platte oder Klinge aufweist, die dünn in der Richtung des Auswahlpfades (4) und nach oben erstreckend ist.

2. Vorrichtung (1) nach Anspruch 1, wobei der erste Positionsdetektor (11) einen Sensor umfasst ausgewählt aus der Gruppe bestehend aus:
- einem magnetischen Sensor,
- einem induktiven Sensor,
- einem optischen Sensor,
- einer Videokamera,
- einer Lichtquelle und einem fotosensitiven Empfänger ausgelegt zum Erfassen und Unterscheiden von Licht und Schattenzonen, die darauf projiziert sind,
- einem Ultraschalldetektor.

3. Vorrichtung (1) nach irgend einem der vorhergehenden Ansprüche, wobei der Kontaktbereich (15) vertikal in einer Ebene radial zu einer Rotationsachse der Lagerungsfläche (3) orientiert ist.

4. Vorrichtung (1) nach irgend einem der vorhergehenden Ansprüche, wobei der elektromagnetische Schieber von dem Auswahlpfad (4) durch eine Seitenwand (14) getrennt ist, die sich lateral entlang mindestens einem Bereich des Auswahlpfades (4) erstreckt, und wobei der Kontaktbereich (15) ausgelegt ist zum Wirken durch eine Durchgangsöffnung (16) in der Seitenwand (14) hindurch auf die Objekte (5) gelagert auf der Lagerungsfläche (3).

5. Vorrichtung (1) nach Anspruch 4, wobei der erste Positionsdetektor (12) und die ersten Handhabungsmittel (8) an der Seitenwand (14) gesichert sind.

6. Vorrichtung (1) nach irgend einem der vorhergehenden Ansprüche, wobei die Regel-/Steuereinheit (13) konfiguriert ist zum Verarbeiten der Positions- und/oder Formsignale empfangen durch den ersten Positionsdetektor (11), um die entlang der ersten Erfassungslänge (12) transportierten Objekte (5) zu zählen und um die Handhabungsmittel als eine Funktion der Zählung der Objekte (5) zu betätigen.

7. Vorrichtung (1) nach irgend einem der vorhergehenden Ansprüche umfassend:
- einen zweiten Zählungsdetektor (19) assoziiert mit dem Auswahlpfad (4) oder mit einem Abgabepfad (17) stromabwärts des Ausgabepunktes (10) und ausgelegt zum Zählen der Objekte (5) und zum Erfassen mindestens einer Positions- und/oder Formeigenschaft davon in einer zweiten Erfassungslänge (18) des Auswahlpfades (4) oder des Abgabepfades (17) und zum Erzeugen korrespondierender Zählungs- und Positionssignale.

8. Vorrichtung (1) nach irgend einem der vorhergehenden Ansprüche umfassend mindestens ein Abweichungselement (25) assoziiert mit dem Auswahlpfad (4) stromaufwärts von dem Ausgabepunkt (10) und verlagerbar von einer Ruheposition (26) nicht-interferierend mit dem Auswahlpfad (4) zu einer Abweichungsposition (27) interferierend mit dem Auswahlpfad (4), um alle auf der Lagerungsfläche (3) verbleibenden Objekte (5) weg von der Lagerungsfläche (3) zu führen.

9. Vorrichtung (1) nach irgend einem der vorhergehenden Ansprüche, wobei der Auswahlpfad mindestens teilweise rund ist und sich eine Seitenwand (14) umschließend entlang des Auswahlpfades (4) erstreckt diesen an einer radialen Außenseite davon definierend, wobei die Position der Seitenwand (14) mit Bezug auf die Position der Lagerungsfläche (3) justierbar ist sowohl in Höhe als auch in der Radialrichtung mit Bezug auf eine Rotationsachse der Lagerungsfläche (3).

10. Vorrichtung (1) nach Anspruch 9, wobei die Außenwand (14) eine Mehrzahl von Wandsegmenten umfasst, deren Enden in den Übergangszonen zwischen zwei Begrenzungssegmenten gleitbar überlappend sind, um die Kontinuität der Seitenwand (14) sicher zu stellen und um eine Expansion oder eine radiale Verkleinerung davon zu ermöglichen,
wobei die Wandsegmente unabhängig mit der Halterungsstruktur (2) mittels Führungssäulen (35) verbunden sind aufweisend:
- eine Basis (36) verbunden mit der Halterungsstruktur (2),
- einen Zwischenbereich (37) verbunden mit der Basis (36) mittels einer horizontalen Führung (38), die eine Positionsjustierung des Zwischenbereichs (37) in Bezug auf die Basis (36) in der horizontalen Richtung ermöglicht,
- einen Verbindungsbereich (40) gesichert an der Seitenwand (14) und verbunden mit dem Zwischenbereich (37) mittels einer vertikalen Führung (42), die eine Höhenjustierung des Verbindungsbereichs (40) in Bezug auf den Zwischenbereich (37) ermöglicht.

11. Vorrichtung (1) nach irgend einem der vorhergehenden Ansprüche umfassend ein Scherelement (41) assoziiert mit dem Auswahlpfad (4) stromaufwärts der ersten Erfassungslänge (12) und positioniert oder verlagerbar in eine Scherposition oberhalb der Lagerungsfläche (3) und in einer justierbaren Höhe von der Lagerungsfläche (3), um Objekte (5) zu eliminieren, die gestapelt über anderen auf der Lagerungsfläche (3) gelagerten Objekten (5) verblieben sind.

12. Vorrichtung (1) nach irgend einem der vorhergehenden Ansprüche, bei der der Kontaktbereich (15) verlagerbar in einer radialen Richtung mit Bezug auf die Rotationsachse der Lagerungsfläche (3) ist zum Ausgeben von Objekten von der Lagerungsfläche (3) oder zum Verlagern von Objekten auf der Lagerungsfläche (3), und bei der der Kontaktbereich (15) sich in einer vertikalen Distanz von weniger als 2 mm von der Lagerungsfläche (3) bewegt.

13. Verfahren zum Vereinzeln und/oder Orientieren von Objekten (5) umfassend die Schritte:
- Bewegen einer Lagerungsfläche (3) entlang eines Auswahlpfades (4);
- Definieren der Objekte (5) in einer kontinuierlichen Weise und mit einer zufälligen Position auf der Lagerungsfläche (3) an einem Initialpunkt (7) des Auswahlpfades (4),
- Ausgeben von Objekten von der Lagerungsfläche (3) oder Verlagern von Objekten auf der Lagerungsfläche (3) entlang einer Handhabungslänge (9) zwischen dem Initialpunkt (7) und einem Ausgabepunkt (10) des Auswahlpfades (4), um an dem Ausgabepunkt (10) des Auswahlpfades (4) eine Folge von den Objekten (5) zu erhalten aufweisend eine gewünschte Positionierung, **gekennzeichnet durch** die Schritte:
- Verwenden eines optischen Sensors zum Erfassen von Positionseigenschaften der Objekte (5) entlang einer ersten Erfassungslänge (12) des Auswahlpfades (4) stromaufwärts von der ersten Handhabungslänge (9) und um entsprechende Positionssignale zu erzeugen,
- Ausführen des Schritts des Ausgebens von Objekten von der Lagerungsfläche (3) oder des Verlagerns von Objekten auf der Lagerungsfläche (3) entlang der Handhabungslänge (9) mittels eines elektromagnetischen Schiebers betätigt **durch** eine elektronische Regel-/Steuereinheit entsprechend den **durch** den optischen Sensor erzeugten Positionssignalen,
- wobei der elektromagnetische Schieber einen Kontaktbereich (15) aufweist ausgelegt zum Wirken auf die auf der Lagerungsfläche (3) gelagerten Objekte (5),
wobei der Kontaktbereich die Form einer Platte oder Klinge aufweist, die dünn in der Richtung des Auswahlpfades (4) und nach oben erstreckend ist.

14. Verfahren nach Anspruch 13 umfassend die Schritte:
- Verwenden eines optischen Sensors zum Erfassen einer Positionseigenschaft der Objekte und zum Erzeugen entsprechender Positions- und Zählungssignale,
- Zählen der Objekte durch Verarbeiten der Positions- und Zählungssignale mittels einer elektronischen Regel-/Steuereinheit;
- Unterteilen der gezählten Objekte in diskrete Gruppen mittels einer elektromechanischen Trennungsvorrichtung und Betätigen der elektromechanischen Trennungsvorrichtung als eine Funktion der Positions- und Zählungssignale.

## Revendications

1. Dispositif (1) pour séparer et/ou orienter des objets (5), comprenant :
- une structure de support (2),
- une surface d'appui (3) reliée à la structure de support (1) et déplaçable le long d'un trajet de sélection (4) et adaptée pour recevoir les objets (5) à partir d'un point initial (7) du trajet de sélection (4),
- des premiers moyens de manipulation (8) associés au trajet de sélection (4) et configurés pour éjecter des objets de la surface d'appui (3) ou pour déplacer des objets sur la surface d'appui (3) sur une première longueur de manipulation (9) entre le point initial (7) et un point de sortie (10) du trajet de sélection (4) afin d'obtenir, au point de sortie (10) du trajet de sélection (4), une séquence desdits objets (5) ayant un positionnement souhaité,
- un premier détecteur de position (11) associé au trajet de sélection (4) et configuré pour détecter des caractéristiques de position et/ou de forme des objets (5) sur une première longueur de détection (12) du trajet de sélection (4) en amont de la première longueur de manipulation (9) et pour générer des signaux de position correspondants,
- une unité de commande électronique (13) connectée pour échanger des signaux avec le premier détecteur de position (11) et avec les premiers moyens de manipulation (8) et configurée pour actionner les premiers moyens de manipulation (8) sélectivement en fonction des caractéristiques de position et/ou de forme,
**caractérisé en ce que** les premiers moyens de manipulation (8) comprennent au moins un poussoir électromagnétique avec une partie de contact (15) adaptée pour agir sur les objets (5) reposant sur la surface d'appui (3),
laquelle partie de contact a la forme d'une plaque ou d'une lame qui est mince dans la direction du trajet de sélection (4) et s'étend vers le haut.

2. Dispositif (1) selon la revendication 1, dans lequel le premier détecteur de position (11) comprend un capteur choisi parmi le groupe comprenant :
- un capteur magnétique,
- un capteur à induction,
- un capteur optique,
- une caméra vidéo,
- une source de lumière et un récepteur de lumière adapté pour détecter et distinguer les zones de lumière et d'ombre qui se projettent dessus,
- un détecteur à ultrasons.

3. Dispositif (1) selon l'une quelconque des revendications précédentes, dans lequel ladite partie de contact (15) est orientée verticalement dans un plan radial par rapport à un axe de rotation de la surface d'appui (3).

4. Dispositif (1) selon l'une quelconque des revendications précédentes, dans lequel le poussoir électromagnétique est séparé du trajet de sélection (4) par une paroi latérale (14) qui s'étend latéralement le long d'une partie au moins du trajet de sélection (4), et ladite partie de contact (15) est adaptée pour agir sur les objets (5) reposant sur la surface d'appui (3) à travers une ouverture traversante (16) dans la paroi latérale (14).

5. Dispositif (1) selon la revendication 4, dans lequel le premier détecteur de position (12) et les premiers moyens de manipulation (8) sont fixés à la paroi latérale (14).

6. Dispositif (1) selon l'une quelconque des revendications précédentes, dans lequel l'unité de commande (13) est configurée pour traiter les signaux de position et/ou de forme reçus par le premier détecteur de position (11) afin de compter les objets (5) transportés le long de la première longueur de détection (12) et pour actionner les moyens de manipulation en fonction du nombre d'objets (5) comptés.

7. Dispositif (1) selon l'une quelconque des revendications précédentes, comprenant un deuxième détecteur de comptage (19) associé au trajet de sélection (4) ou à un trajet d'évacuation (17) en aval du point de sortie (10) et configuré pour compter les objets (5) et pour détecter au moins une caractéristique de position et/ou de forme sur une deuxième longueur de sélection (18) du trajet de sélection (4) ou d'évacuation (17) et pour générer des signaux de comptage et de position correspondants.

8. Dispositif (1) selon l'une quelconque des revendications précédentes, comprenant au moins un élément de déviation (25) associé au trajet de sélection (4) en amont du point de sortie (10) et déplaçable d'une position de repos (26) dans laquelle il n'interfère pas avec le trajet de sélection (4) à une position de déviation (27) dans laquelle il interfère avec le trajet de sélection (4) afin de guider tous les objets (5) restant sur la surface d'appui (3) et de les éloigner de la surface d'appui (3).

9. Dispositif (1) selon l'une quelconque des revendications précédentes, dans lequel le trajet de sélection est au moins partiellement circulaire et une paroi latérale (14) s'étend sur la circonférence le long du trajet de sélection (4) en définissant celui-ci sur son côté extérieur dans le sens radial, la position de la paroi latérale (14) pouvant être ajustée par rapport à celle de la surface d'appui (3) à la fois en hauteur et dans le sens radial par rapport à un axe de rotation de la surface d'appui (3).

10. Dispositif (1) selon la revendication 9, dans lequel la paroi extérieure (14) comprend plusieurs segments de paroi dont les extrémités se chevauchent de façon coulissante dans les zones de transition entre deux segments contigus afin d'assurer la continuité de la paroi latérale (14) et de permettre son expansion ou sa rétraction radiale,
lesdits segments de paroi étant reliés indépendamment à la structure de support (2) par des montants de guidage (35) possédant :
- une base (36) reliée à la structure de support (2),
- une partie intermédiaire (37) reliée à la base (36) par un guide horizontal (38) permettant d'ajuster la position de la partie intermédiaire (37) par rapport à la base (36) dans le sens horizontal,
- une partie de liaison (40) fixée à la paroi latérale (14) et reliée à la partie intermédiaire (37) par un guide vertical (42) permettant un réglage en hauteur de la partie de liaison (40) par rapport à la partie intermédiaire (37).

11. Dispositif (1) selon l'une quelconque des revendications précédentes, comprenant un élément racleur (41) associé au trajet de sélection (4) en amont de la première longueur de détection (12) et positionné ou pouvant être déplacé dans une position de raclage au-dessus de la surface d'appui (3) et à une hauteur réglable par rapport à ladite surface d'appui (3), de façon à balayer les objets (5) qui sont restés empilés par-dessus d'autres objets (5) reposant sur la surface d'appui (3).

12. Dispositif (1) selon l'une quelconque des revendications précédentes, dans lequel la partie de contact (15) peut être déplacée dans le sens radial par rapport à l'axe de rotation de la surface d'appui (3) pour éjecter des objets de la surface d'appui (3) ou déplacer des objets sur la surface d'appui (3), et la partie de contact (15) se déplace à une distance verticale de la surface d'appui (3) inférieure à 2 mm.

13. Procédé pour séparer et/ou orienter des objets (5), comprenant les étapes de :
- déplacement d'une surface d'appui (3) sur un trajet de sélection (4) ;
- définition des objets (5) de manière continue et dans une position aléatoire sur la surface d'appui (3) en un point initial (7) du trajet de sélection (4) ;
- éjection d'objets de la surface d'appui (3) ou déplacement d'objets sur la surface d'appui (3) sur une longueur de manipulation (9) entre le point initial (7) et un point de sortie (10) du trajet de sélection (4), de façon à obtenir au point de sortie (10) du trajet de sélection (4) une séquence desdits objets (5) ayant un positionnement souhaité,
**caractérisé en ce qu'**il comprend les étapes suivantes :
- utilisation d'un capteur optique pour détecter des caractéristiques de position des objets (5) sur une première longueur de détection (12) du trajet de sélection (4) en amont de la première longueur de manipulation (9) et pour générer des signaux de position correspondants,
- exécution de l'étape d'éjection d'objets de la surface d'appui (3) ou de déplacement d'objets sur la surface d'appui (3) sur ladite longueur de manipulation (9) au moyen d'un poussoir électromagnétique actionné par une unité de commande électronique suivant les signaux de position produits par le capteur optique,
ledit poussoir électromagnétique ayant une partie de contact (15) adaptée pour agir sur les objets (5) reposant sur la surface d'appui (3),
laquelle partie de contact a la forme d'une plaque ou d'une lame qui est mince dans la direction du trajet de sélection (4) et s'étend vers le haut.

14. Procédé selon la revendication 13, comprenant les étapes suivantes :
- utilisation d'un capteur optique pour détecter une caractéristique de position desdits objets et pour générer des signaux de position et de comptage correspondants ;
- comptage des objets par le traitement des signaux de position et de comptage à l'aide d'une unité de commande électronique ;
- division desdits objets comptés en groupes discrets par un dispositif de séparation électromagnétique et actionnement dudit dispositif de séparation électromagnétique en fonction des signaux de position et de comptage.
